# EUROPEAN PATENT APPLICATION

(11) **EP 2 033 726 A1**
(43) Date of publication of application: **11.03.2009**
(21) Application number: 07017677.1
(22) Date of filing: 10.09.2007
(51) Int. Cl.: B23B 7/12, B23B 11/00, B23Q 39/02

(54) **Automatic lathe**

(71) Applicant: HANWHA TECH M Co., Ltd., Changwon-city Kyoungnam-do (KR)
(72) Inventor: An, Sang Cheol, Kimhae-city Kyoungnam-do (KR); Kim, Kwang Il, Kimhae-city Kyoungnam-do (KR)
(74) Representative: HOFFMANN EITLE

(57) **Abstract**

The present relates to an automatic lathe, and more particularly, to an automatic lathe capable of mounting various tools with arranging a tool turret(10), which is transferable in three axes, to a conventional automatic lathe provided with a rear tool post fixed to a body(1), and a gang type tool post(20, 30) transferring in two axes, between the gang type tool post(20, 30) and a main shaft(2) so that they are opposite to each other, thereby carrying out special machining, and can improve an working efficiency of the workers by arranging the tool to facilitate the tooling and tool exchange.

## Description

### REARGROUND OF THE INVENTION

### Field of the Invention

The present invention relates to an automatic lathe, and more particularly, to an automatic lathe capable of mounting various tools with arranging a tool turret, which is transferable in three axes, to a conventional automatic lathe provided with a rear tool post fixed to a body, and a gang type tool post transferring in two axes, between the gang type tool post and a main shaft so that they are opposite to each other, thereby carrying out special machining, and can improve an working efficiency of workers by arranging the tool to facilitate tooling and tool exchange.

### Background of the Related Art

Recently, an automatic lathe is largely required among machining tools, because it can realize an automatization of machining works and achieve high speed of the machining works, and because various special tools can be mounted to it according to the mass production of the various complicated products.

Accordingly, a tool .turret has been required for the automatic lathe so that a lot of various tools can be mounted to it, however, the conventional automatic lathe was restricted in the mountable tools because a cross tool post and an outer-diameter tool post were mounted above a guide bush and only a rear tool post was mounted at the left side or right side of a sub-shaft (sub-spindle), so that it was difficult to carry out special machining. In addition, in case of an automatic lathe provided with a tool turret, it was difficult for the tooling and the exchange of tools because the tool turret was mounted above a main shaft.

Moreover, since the conventional automatic lathe was constructed so that only the tool could be mounted and separated from the main body of the cross tool post, abundant time and expense was required to exchange a plurality of bearings, when problems were require for a plurality of bearings mounted to the main body due to repeated high speed rotation of the bearings.

### SUMMARY OF THE INVENTION

Accordingly, the present invention has been made in view of the above-mentioned problems occurring in the prior art, and it is a primary object of the present invention to provide an automatic lathe, which can increase the number of tools to be mounted, provide tools for special process, and facilitate the tooling and the tool exchange, by constructing that a tool turret is additionally mounted at a lower portion of a guide bush of the automatic lathe provided with a gang type tool post consisted of a cross tool post and an outer-diameter tool post, and a rear tool post.

Another object of the present invention is to provide an automatic lathe, which can reduce occurrence of noise by constructing to transfer dynamic power from a motor to the tools mounted at a cross tool post by means of splines.

Another object of the present invention is to provide an automatic lathe, which can facilitate the exchange of bearings, reduce tooling time, and facilitate the tooling by constructing a housing detachable to a cross tool post separately and mounting a plurality of bearings at the housing, so that the housing can be detached when the bearings were damaged.

To accomplish the above objects of the present invention, according to the present invention, there is provided an automatic lathe comprising a main shaft for transferring a machining material, a guide bush positioned on an extended line of the main shaft for guiding the machining material, a sub-shaft for chucking the other end of the machining material, a tool turret mounted at the lower portion of the guide bush for mounting various tools, a cross tool post mounted above the guide bush for carrying out machining such as drilling, milling, and the like, an outer-diameter tool post for carrying out thread machining, and the like, and a rear tool post mounted above the sub-shaft for carrying out machining such as drilling, milling, and the like of a rear surface of the material.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is an illustrative construction view of an automatic lathe according to the present invention;

FIG. 2 is an enlarged view of a portion of the present invention;

FIG. 3 is an illustrative operation view of a tool post and shafts of the automatic lathe according to the present invention;

FIG. 4 is an illustrative construction view of a cross tool post used in the present invention;

FIG. 5 is an illustrative installation view of the cross tool post used in the present invention;

Fig. 6 is an illustrative separation view of the cross tool post used in the present invention.

### DETAILED DESCRIPTION OF THE PREFERRED EMBODIMENT

Hereinafter, the automatic lathe of the present invention will be described in detail with reference to the appended drawings.

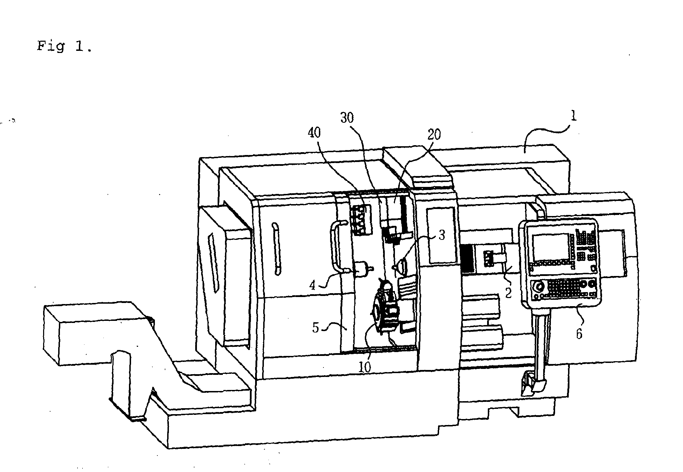

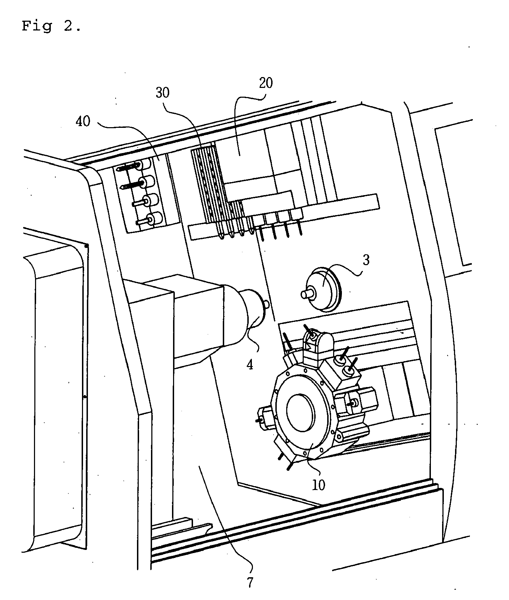

At first, FIG. 1 is an illustrative construction view of an automatic lathe according to the present invention, and FIG. 2 is an enlarged view of a portion of the present invention.

The automatic lathe of the present invention comprises a main shaft 2 for transferring a machining material, a guide bush 3 positioned on an extended line of the main shaft 2 for guiding the machining material, a sub-shaft 4 for chucking the other end of the machining material, a tool turret 10 mounted at a lower portion of the guide bush 3 for mounting various tools, a cross tool post 20 mounted above the guide bush 3 for carrying out the machining such as drilling, milling, and the like, an outer-diameter tool post 30 for carrying out thread machining, and the like, and a rear tool post 40 mounted above the sub-shaft for carrying out the machining such as drilling, milling, and the like to a rear surface of the material. Non-explained numerals are a body 1, a door 5, a control box 6, and a bed 7.

Herein, the bed 7 is arranged to be inclined to about 60° and not vertically with respect to the bottom surface of the lathe, so that it is possible to smoothly discharge chips dropped to the bottom, which were produced during the machining of the machining material at the cross tool post, the outer-diameter tool post, and the rear tool post, without directly dropped to the tool turret 10.

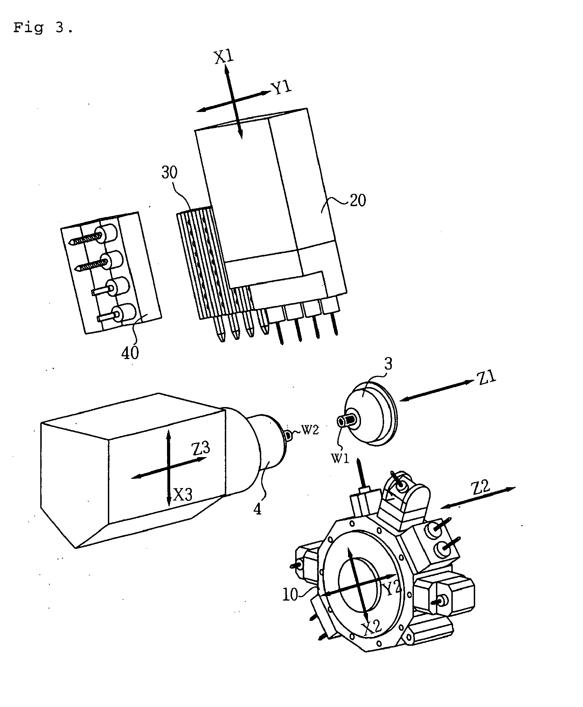

FIG. 3 is an illustrative operation view of a tool post and shafts of the automatic lathe according to the present invention, in which a main shaft is transferred in the Z1 direction together with transferring the machining material by chucking it, and a sub-shaft is transferred in the X3 direction in addition to the Z3 direction.

The gang type tool post consisted of an outer-diameter tool post 30 and a cross tool post 20 can be transferred in the X1 direction and the Y1 direction, and the transferring in the Z direction is not required because it is accomplished in the main shaft 2 and the sub-shaft 4.

The rear tool post 40 is fixed to the body to machine the rear surface (a cutting surface of the material, after it is chucked) of the machining material chucked to the sub-shaft 4.

The tool turret 10 can be transferred in all directions including the X direction, the Y direction, and the Z direction, however, the tool turret 10 used in the present invention can be transferred in three axes directions, although the usual tool turret is generally transferred in two axes including the Z direction.

In the present invention, the X direction represents for a width direction of the machining material from the upper side to the lower side, the Y direction represents for a width direction of the machining material from the left side to the right side, and the Z direction represents for an axis direction of the main shaft, in other words, a transferring direction of the machining material.

The reason of dividing the X direction into X1, X2, X3, and the like is to distinguish the transferring directions of respective tool posts, and all directions of X1, X2, and X3 are parallel with the X direction. The remaining Y and Z directions are disposed as above based on the same reasons.

At first, when the machining material is transferred through the main shaft 2, the machining is carried out at the state of the machining material chucked by the guide bush 3. In this instance, each tool posts can be controlled at the same time without intervened from each other.

In other words, when the machining material is mounted to the sub-shaft 4 and the main shaft 2, the rear surface machining of the machining material W mounted at the sub-shaft 4 is carried out by a rear tool post 40 and the machining material w1 mounted at the main shaft 2 can be simultaneously carried out by the outer-diameter tool post 30 and the cross tool post 20.

Also, it is possible to machine a hole eccentric to the center because the sub-shaft 4 can be transferred to the X direction in addition to the z direction, and it is possible to carry out all the complicated machining such as eccentric taper machining, machining of an eccentric hole, and machining of a special design, and the like because the tool turret can be transferred in all three axial directions.

If it is required to machine the rear surface of the machining material after cutting it, the machining is carried out at the tool turret 10 and the rear tool post 40 after chucking the cut material with the sub-shaft 4, and the finished product is discharged through a product outlet (not shown) formed at the lower portion of the sub-shaft 4.

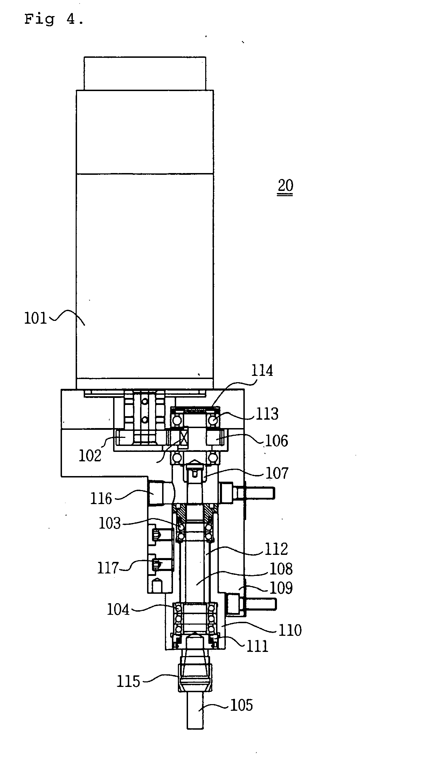

FIG. 4 is an illustrative construction view of a cross tool post used in the present invention, in which the cross tool post 20 of the present invention comprises a cross drill motor, which is a power generating device, a plain gear 102 rotated by the cross drill motor 101, an idle gear 106 rotated by the plain gear 102, an idle shaft 107 engaged with the idle gear 106 for revolving, and a cross drill portion engaged with the idle shaft 107.

Herein, the cross drill portion comprises a splined shaft 108, a rotating tool 105 engaged with the shaft 108, and a housing 110 for accommodating the shaft 108 and the tool 105, and is provided with a plurality of bearings 103, 104. Non-explained numerals are a bolt 116 without a head, a stop screw 117, a retainer 111, a main body 109 of the cross tool post, a collar 112, a parallel key 118, a ball bearing 113, and a plate spring 114.

At first, when the cross drill motor 101 is rotated, the plain gear 102 is also rotated by the motor shaft, the idle gear 106 and the idle shaft 107 are rotated by the plain gear 102, and the shaft 108 of the cross drill portion, which is engaged at the inside of the idle shaft 107, is rotated.

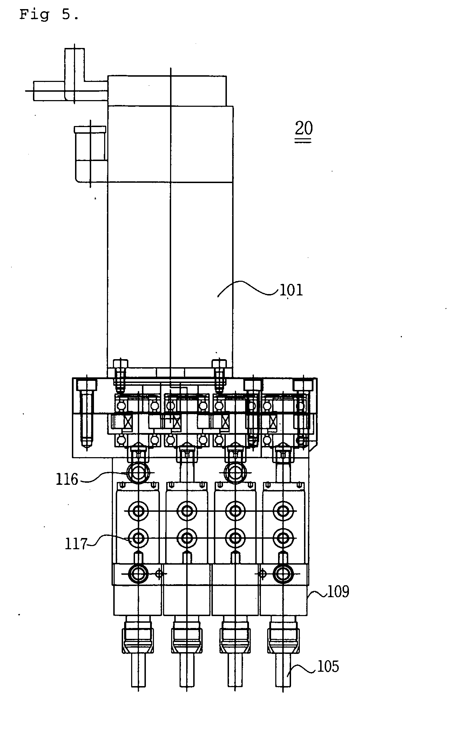

FIG. 5 is an illustrative installation view of the cross tool post used in the present invention. In case of the automatic lathe of the present invention, a plurality of cross drill portions is engaged with the main body 109 of the cross tool post so that they are rotated.

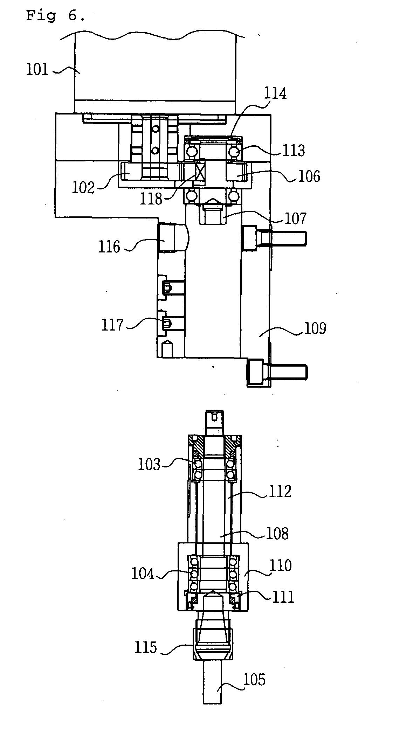

As shown in FIG. 6, the cross drill portion can be detached entirely from the main body 109 of the cross tool post, and a plurality of bearings 103, 104 is mounted to the housing 110.

In other words, with regard to the conventional cross drill of the automatic lathe, it was difficult to exchange bearings when they were damaged due to repeated high speed rotation, because they were mounted in grooves formed at the main body of the cross tool post. However, according to the present invention, a plurality of bearings 103, 104 is mounted in the housing 110, which can be easily detached from the main body 109 of the cross tool post, to facilitate the maintenance, repair and exchange of them when they are damaged.

In addition, it is possible to reduce the noise and the expense of making the product in comparison with the conventional cross tool post, which transferred the dynamic power by using only gears, because the tool 105 such as the cross drill, and the like is rotated by splines, after the idle shaft 107 is splined at the inside and the splined shaft 108 at the outside is engaged with the idle shaft 107 and rotated.

As described above, in the automatic lathe according to the present invention, the tool turret is mounted to the lower portion of the guide bush thereby enlarging the work space, so that it is possible to carry out the machining of a complicated three-dimensional shape by using various tools, and it is possible to simultaneously machine a machining material with the gang type tool and the tool mounted to the tool turret thereby reducing the machining time drastically.

Also, it is possible to reduce the occurrence of the noise, the time consumed in the assembly, and the expense for the machining of the gears by constructing the automatic lathe so that the dynamic power can be transferred to the tool mounted to the cross tool post from the motor by means of splines. In addition, it is possible to easily exchange bearings, reduce the tooling time, and facilitate the tooling, when they are damaged, by constructing that the housing can be detached to the cross tool post separately and mounting a plurality of bearings in the housing.

While the present invention has been described with reference to the particular illustrative embodiments, it is not to be restricted by the embodiments but only by the appended claims. Also, it is to be appreciated that those skilled in the art can change or modify the embodiments without departing from the scope and spirit of the present invention.

## Claims

1. An automatic lathe comprising:
a main shaft (2) for transferring a machining material, a guide bush (3) positioned on an extended line of the main shaft (2) for guiding the machining material,
a sub-shaft (4) for chucking the other end of the machining material,
a tool turret (10) mounted at a lower portion of the guide bush (3) for mounting various tools,
a cross tool post (20) mounted above the guide bush (3) for carrying out machining such as drilling, milling, and the like,
an outer-diameter tool post (30) for carrying out thread machining, and the like, and
a rear tool post (40) mounted above the sub-shaft for carrying out machining such as drilling, milling, and the like of a rear surface of the material.

2. The automatic lathe according to claim 1, wherein the tool turret (10) is transferable all directions of X, Y, and Z.

3. The automatic lathe according to claim 1 or 2, wherein the main shaft (2) is transferable in the Z1 direction, the sub-shaft (4) is transferable in the Z3 and X3 directions, and a gang type tool post consisted of an outer-diameter tool post (30) and a cross tool post (20) is transferable in the X1 direction and the Y1 direction.

4. The automatic lathe according to one of the preceding claims, wherein the tool turret (10) comprises a cross drill motor (101), which is a power generating device, a plain gear (102) rotated by the cross drill motor (101), an idle gear (106) rotated by the plain gear (102), an idle shaft (107) engaged with the idle gear (106) for revolving, and a cross drill portion engaged with the idle shaft (107).

5. The automatic lathe according to claim 4, wherein the cross drill portion includes a splined shaft (108), a tool (105) rotatably engaged with the shaft (108), and a housing for accommodating the shaft (108), the tool (105), and a plurality of bearings therein.
